# EUROPEAN PATENT APPLICATION

(11) **EP 3 392 572 A1**
(43) Date of publication of application: **24.10.2018**
(21) Application number: 16875927.2
(22) Date of filing: 18.11.2016
(51) Int. Cl.: F24D 13/02, F24D 19/10, H05B 3/42, H05B 3/06, H05B 3/56, H05B 3/03, H05B 1/02

(54) **NATURAL ROTATING CONVENTION-TYPE HEATING SYSTEM**

(30) Priority: 17.12.2015 KR 20150181152
(71) Applicant: Kang, Byung Ho, Daegu 42675 (KR)
(72) Inventor: Kang, Byung Ho, Daegu 42675 (KR)
(74) Representative: Zanettin, Gianluigi
(86) International application number: PCT/KR2016/013307
(87) International publication number: WO 2017/104985

(57) **Abstract**

A natural convection-type heating system implements, through a simple structure, indoor heating having little temperature deviation according to locations such as the floor and the ceiling, is easily constructed, facilitates maintenance and management, provides excellent heat efficiency and convenience of use. The natural convection-type heating system includes: an installation post installed on a bottom surface of a building in a certain interval close to an inner wall of the building and having a plurality of brackets vertically arranged thereon in a certain interval; a heating element continuously arranged along the inner wall of the building by being placed on each of the plurality of brackets; and a main control unit configured to apply electrical power to the heating element and control a heating operation of the heating element.

## Description

### TECHNICAL FIELD

The present disclosure relates to a natural rotating convection-type heating system, and more particularly, to a natural rotating convection-type heating system which may implement indoor heating of a building by a natural rotating convection method that induces directionality in air to rotate an indoor space when the air convects by using an electric heater, thereby almost removing a temperature deviation according to a location including the upper and lower sides of the indoor space and enabling easy construction, convenient maintenance and management, excellent heat efficiency, and usability, through a simple structure in which a forced circulation apparatus for heated air or a separate air conditioner to reduce a temperature deviation in the upper and lower sides is not needed.

### BACKGROUND ART

"Ondol", which is also called Banggoodeul, refers to a Korean traditional floor heating system. In other words, Hanok, which is a typical old house of Korea, has Agungi, a fireplace for making a fire, and heating is performed as a hot smoke generated from the Agungi passes under Gudeuljang, a soleplate placed on the floor of a room. The smoke is finally exhausted through a chimney located at the end of the Gudeuljang. Such a heating method is the Ondol heating method.

The Ondol heating method has a merit of keeping the heat of Gudeuljang for a relatively long time after a direct heat source is removed from the Agungi. In contrast, if the Gudeul (floor of a room) cracks or breaks, smoke may enter the room causing carbon monoxide poisoning. Furthermore, it is inconvenient to overheat more than necessary in order to stay overnight with the residual heat when making a fire before sleeping. It is a structural demerit of the Ondol that a temperature difference is generated between a warmer part and an upper part of a floor. In particular, the Ondol mainly heating the floor surface that the human body contacts for sleeping parallelly requires a brazier because of a low air heating efficiency.

To improve the traditional Ondol heating method, a hot water boiler has been developed. After modernization, most buildings such as apartments or houses have adopted, until now, a hot water Ondol heating method in which, instead of the Agungi and the Gudeuljang, a coil type pipe is embedded in the floor of a room and hot water heated by a boiler is circulated for heating through the pipe in the floor of a room.

Meanwhile, for buildings such as apartments or common houses in a downtown, a supply of coal briquette, oil, or gas, which is the fuel of a boiler for heating water for the Ondol heating is smooth, whereas the supply of oil or gas, which is the fuel of a boiler, is not smooth in a mountain area or island area. Thus, in the mountain area or island area, the traditional Ondol heating system using Agungi are still frequently installed.

However, even in the case of traditional Ondol heating system, it is not easy to obtain trees, which is mainly used as heating fuel and was easily obtained at a low cost in the past, due to various regulations according to protection of nature, so that the supply of heating fuel is not smooth.

In addition, it is often necessary to heat general buildings such as houses, apartments, and commercial buildings, as well as various buildings such as cattle sheds, greenhouses, vinyl houses, and factories. For buildings other than houses, due to scale, structural characteristics, and environmental factors, during installation of the Ondol heating system, a large amount of construction costs may be generated and a construction period increases. Accordingly, convectional type heating systems are mainly used for heating of buildings other than houses.

When liquid and gas are heated, a heated material gets lighter and moves upward and a cold material moved down, and an overall temperature increases. As such, transfer of heat according to a direct movement of a material is referred to as convection.

Transfer of heat as a fluid is smoothly moved due to a density difference caused by heating is called natural convection. Forced convection refers to a transfer of heat in which a fluid is forcibly moved by a hot air fan or the like. For buildings other than houses, heating is performed by a forced convection method mainly using a hot air fan or the like.

A typical example of the forced convection heating method is heating of a vinyl house, which is described below.

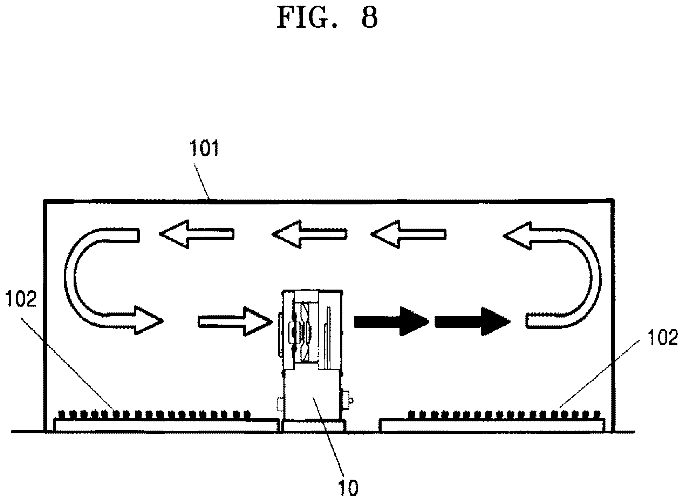

Korean Utility Model Registration No. 20-0233821 discloses a vinyl house tunnel heating system, in which, as illustrated in FIG. 8, a heating wire is formed at one side space portion in a case 10 and an air blower is formed at another side space portion, and the heating wire and the air blower are operated by a control device including a temperature sensor for detecting a temperature in the vinyl tunnel 101 and a temperature control switch for setting the temperature, and thus heating in the tunnel is performed by air circulation in the tunnel 101 by the air blower and air heating by the heating wire.

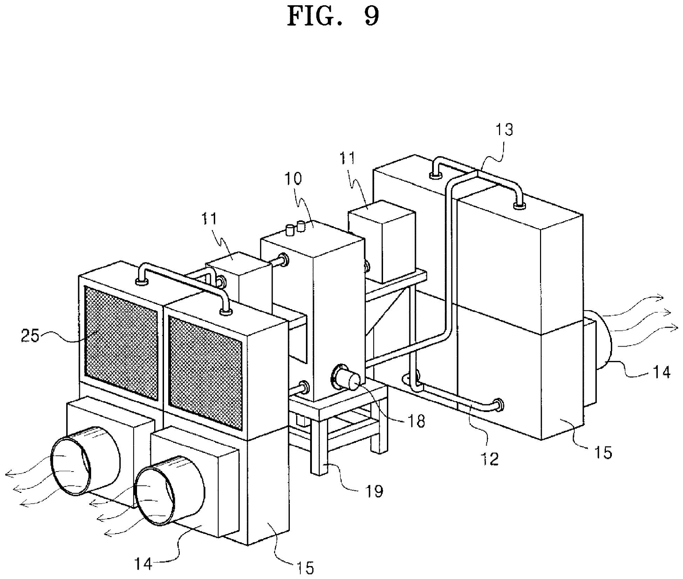

In another example, Korean Utility Model Registration No. 20-0264833 discloses a heating system for a vinyl house, in which, as illustrated in FIG. 9, a boiler 10 for heating the inside of a room by circulating hot water by using a hot water circulation apparatus includes a device for supplying hot heat to the inside of a vinyl house by a ventilation fan 14 rotating at high speed, the hot heat being radiated simultaneously as a heat medium filling a water supply pipe 12 and a water exhaust pipe connected to the boiler 10 is circulated through a plurality of heat suppliers 15 formed in a multilayer by a circulation pump 11, and several pipes are formed in the boiler including an inner tube and an outer tube to allow cooking oil that is the heat medium to be circulated by the circulation pump 11 while repeating filling and heating.

### DESCRIPTION OF EMBODIMENTS

### TECHNICAL PROBLEM

In the above-described heating systems according to the related art, in spite of a forced convection process, heat that is artificially supplied is moved upward by a natural convection effect and accumulated in a ceiling part first, generating a great temperature difference between the floor and the ceiling. Thus, to artificially mix the upper air and the lower air, a separate apparatus such as an agitator is used for forced convection of the upper and lower air, thereby reducing a temperature deviation.

Also, since indoor heating is performed by hot wind artificially supplied to the inside of a room, a heating time increases and thus density of oxygen decreases and indoor air becomes cloudy.

Also, in order to supply fresh outside air to the inside of a room with cloudy air, air ventilation is frequently performed. When outside air is supplied to the inside of a room for ventilation while heating is performed in a method of heating indoor air, the indoor air heated by the supply of hot wind is rapidly cooled, and heating efficiency is rapidly reduced. As a result, an operation time of a boiler for supplying hot wind is further increased, and this economic burdens increase according to an increase in fuel costs or energy usage costs.

Also, when heating is performed by using a boiler, a boiler and a pump are needed to heat and circulate a heat medium. Accordingly, a large amount of a construction cost is needed, and furthermore a construction process is inconvenient. Since operation noise is generated during an operation process, when a boiler is installed inside a building, the noise causes unpleasantness. Thus, indoor installation of a boiler becomes difficult, and thus a separate boiler room, which takes a lot of space, is needed for management of a boiler.

In addition, when an inner space of a building needing heating is large, a large capacity of a boiler is installed. When the capacity of a boiler increases, considerable knowhow is needed for maintenance and management of a boiler. Accordingly, management by an expert having a certified license is unavoidable, and thus labor expenses according to employment of an expert increases the operation and maintenance costs of a boiler.

In addition, since most boilers use fossil fuels such as oil for efficiency and convenience, an exhaust gas containing a toxic gas is exhausted causing air pollution, which is not environmentally friendly. Furthermore, as the capacity of a boiler increases, there are various problems, for example, heat efficiency is lowered, heating efficiency is lower, and fuel cost expense increases.

Also, when a chimney for discharging an exhaust gas is blocked or the exhaust gas is not smoothly discharged for various reasons, the exhaust gas is introduced into the inside of a room contaminating the indoor air.

In particular, since pipes are installed in the entire area of a floor surface, air is moved upward only in the entire space and thus heat is accumulated in the ceiling part, thereby causing not a little waste of energy.

Accordingly, there is a high demand for development of a heating system which may improve a high temperature deviation according to a position such as an upper part and a bottom part in a heating space, inconvenience in installation, maintenance and management, and usage, and lower heat efficiency, etc., which are demerits of the related art.

### SOLUTION TO PROBLEM

According to an aspect of the present disclosure, the natural rotating convection-type heating system according to the present disclosure includes an installation post installed on a bottom surface of a building in a certain interval close to an inner wall of the building and having a plurality of brackets vertically arranged thereon in a certain interval; a heating element continuously arranged along the inner wall of the building by being placed on each of the plurality of brackets; and a main control unit configured to apply electrical power to the heating element and control a heating operation of the heating element, in which heating of inside of the building is performed by implementing a natural rotating convection effect as air heated by the heating element is moved upward above the heating element and ambient cool air is introduced to a lower portion of the heating element.

Furthermore, the heating element includes: a pipe having both end portions that are closed to maintain an inner space in a vacuum state; a heating wire accommodated in the pipe to radiate heat by electrical conduction; a wire electrically connected to the heating wire; and a connection wire connected to the wire and supplying electrical power.

Furthermore, the main control unit includes: a power supply unit configured to receive electrical power from an external power source and supply electricity to the heating element; a temperature control unit configured to set a heating temperature by heating of the heating element; a time control unit configured to set a heating time by the heating of the heating element; a display configured to display the temperature set by the temperature control unit and the time set by the heating time control unit; sensor units configured to respectively detect the temperature of the power supply unit and the temperature of the inside of a building; and a microcomputer configured to control supply of electricity performed by the power supply unit according to signals provided by the temperature control unit, the time control unit, and the sensor units.

According to the present disclosure, a temperature deviation according to a location including the upper and lower sides of the indoor space may be almost removed and easy construction, convenient maintenance and management, excellent heat efficiency, and usability may be enabled, through a simple structure.

### ADVANTAGEOUS EFFECTS OF DISCLOSURE

According to the natural rotating convection-type heating system according to the present disclosure, since heating is performed by a natural rotating convection method using a heating element using electricity, external cool air may be prevented from intruding into a center portion of a room, indoor air that convects may have rotating directionality without any separate circulation apparatus so that a temperature deviation between a floor and a ceiling as well as between a center portion and an edge is hardly generated, deterioration of quality of indoor air may be prevented, and frequent ventilations are unnecessary so that an indoor temperature may be appropriately maintained.

Also, since an installation process is very simple, an installation cost is low, an amount of energy consumed for heating is very low, thereby saving an operation cost much, easy maintenance and management may be possible, without professional technical knowhow, due to a simple structure, and a safety device for overheat prevention may be obtained through a simple circuit configuration, the natural rotating convection-type heating system according to the present disclosure may be very economic and efficient, and have excellent usability.

Also, since a combustion process of fossil fuel to obtain heat for heating is not needed, an exhaust gas containing environment contamination materials is not generated. Since an air blower for forcibly circulating hot air is not needed, there is no operating noise and thus all constituent elements of a system may be installed indoors. Accordingly, efficient use of space is possible, and ecofriendly and comfortable use may be possible.

### BRIEF DESCRIPTION OF DRAWINGS

FIG. 1 illustrates a configuration of a natural rotating convection-type heating system according to an embodiment of the present disclosure.
FIG. 2 is a perspective view showing a coupling state of an installation post and a heating element of the natural rotating convection-type heating system according to an embodiment of the present disclosure.
FIG. 3 is a perspective view showing a coupling state of an installation post and a heating element of a natural rotating convection-type heating system according to another embodiment of the present disclosure.
FIG. 4 is a cross-sectional view of a configuration of the heating element of the natural rotating convection-type heating system according to an embodiment of the present disclosure.
FIG. 5 is a block diagram of a configuration of a main control unit of the natural rotating convection-type heating system according to an embodiment of the present disclosure.
FIG. 6 is a cross-sectional view showing a natural rotating convection-type heating system according to another embodiment of the present disclosure.

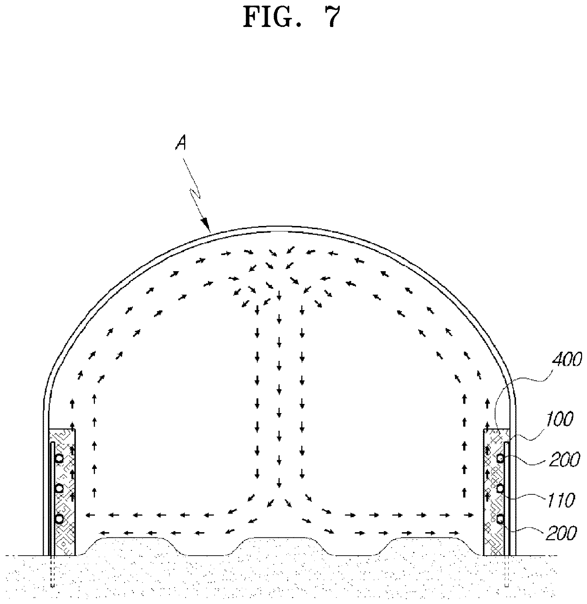

FIG. 7 illustrates an example of circulation of heat for heating according to the natural rotating convection-type heating system according to an embodiment of the present disclosure.
FIGS. 8 and 9 illustrate the heating systems according to the related art.

### BEST MODE

A natural rotating convection-type heating system according to the present disclosure may include an installation post 100 installed on a bottom surface of a building A in a certain interval close to an inner wall of the building A and having a plurality of brackets 110 vertically arranged thereon in a certain interval, a heating element 200 continuously arranged along the inner wall of the building A by being placed on each of the brackets 110, and a main control unit 300 that applies electrical power to the heating element 200 and controls a heating operation of the heating element 200.

The installation post 100 is formed of a plate member having a vertically long shape with a certain width. The brackets 110 are vertically arranged on an inner surface of the installation post 100 in a certain interval. A lower end portion of the installation post 100 is fixedly installed on the bottom surface of the building A.

Each of the brackets 110 has one side fixed to the inner wall of the installation post 100, and simultaneously the other side thereof has an open portion through which the heating element 200 may be input or output by a forcible insertion method. Accordingly, the brackets 110 may be formed of a metal material having elasticity or a synthetic resin material having heat-resistance so that the heating element 200 may be firmly fixed to the brackets 110 when the heating element 200 is coupled to the brackets 110 by the forcible insertion method.

Also, the brackets 110 are vertically arranged in a certain interval to sufficiently secure a heat radiation area of the heating element 200 placed in each of the brackets 110. Accordingly, heat exchange with air around the heating element 200 is smoothly performed so that heat efficiency may be improved and a time for increasing ambient temperature may be reduced.

In detail, as the heating elements 200 are vertically placed, the heating element 200 at the upper side exchanges heat with air having a lower atmospheric pressure because the heating element 200 at the lower side increases temperature or the air and decreases density of the air, a temperature increase time may decrease toward the lower side and an air lift force may be amplified.

Furthermore, by the air that is rapidly moved upward as the temperature of air increases and the density and atmospheric pressure of air decrease toward the upper side due to the vertical placement, the air in the bottom part having relatively lower temperature and relatively higher density and atmospheric pressure is continuously pulled in a heat exchange space secured by the vertical placement.

This is because a natural rotating convection effect is implemented as hot air heated by the heating element 200 moves to a center portion of the upper side to heat indoor air and cool air in the lower side is induced in a direction toward the heating element 200 to be heated, and the air cooled by heating the indoor air while moving toward the upper center portion is moved back to the lower side, forming rotating directionality.

The interval between the brackets 110 may be a range of 15 cm to 30 cm, and the number of the brackets 110 may be 3 to 5, but the present disclosure is not limited thereto.

A lower end portion of the installation post 100 may further include a coupling device to facilitate installation according to a type of a building where the installation post 100 is installed.

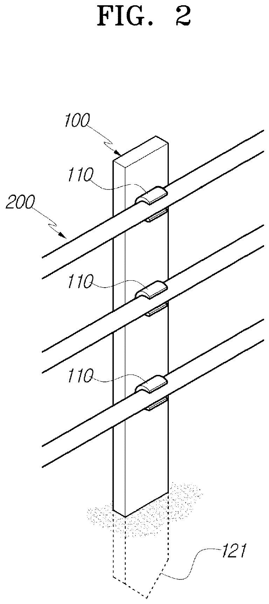

In other words, in a building such as a vinyl house suing the ground as an indoor floor, without an indoor bottom surface integrated with the building, as illustrated in FIG. 2, a coupling device 121 having a wedge shape is formed at the lower end portion of the installation post 100, and thus the installation post 100 may be easily embedded under the ground surface to a certain depth.

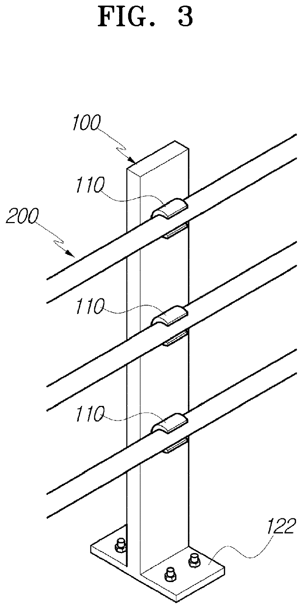

In contrast, in a general building with an indoor bottom surface integrated with the building, as illustrated in FIG. 3, the installation post 100 may further include a coupling device 122 having a flange shape and fixed by using a combining device such as an anchor bolt to the lower end portion of the installation post 100 so that the installation post 100 may be easily vertically installed on the indoor bottom surface.

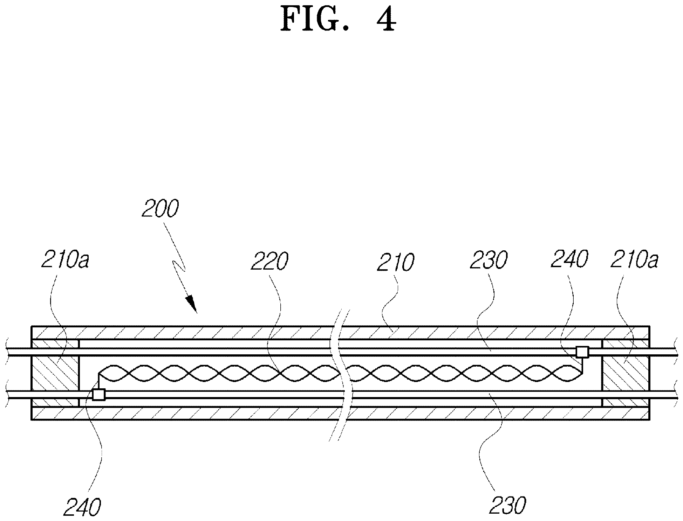

The heating element 200, as illustrated in FIG. 4, may include a pipe 210 having both end portions that are closed to maintain an inner space in a vacuum state, a heating wire 220 accommodated in the pipe 210 to radiate heat by electrical conduction, a wire 230 electrically connected to the heating wire 220, and a connection wire 240 connected to the wire 230 and supplying electrical power.

The pipe 210 is formed of a material having excellent heat-resistance. A sealing member 210a is inserted in both end portions of the pipe 210, forming one body, to close both end portions for internal vacuuming. When the heating wire 220 installed in the pipe 210 is heated, since the inside of the pipe 210 is in a vacuum state, heat loss in the pipe 210 is reduced and thus heat radiated from the heating wire 220 is radiated through an outer surface of the pipe 210 without loss, thereby achieving a high heat efficiency.

The sealing member 210a may be formed of any one of silicone, urethane foam, a foaming agent, rubber, and synthetic resin having excellent airtightness and watertightness, but the present disclosure is not limited thereto. The pipe 210 may be manufactured with both end portions previously closed in a forming process of the pipe 210.

The heating wire 220 is a wire member radiating heat by electrical conduction and may be a carbon heating wire, which has high heat-resistance, has high electrical conductivity and heat conductivity, is light and has a low thermal expansion coefficient, and has excellent durability, a silicone heat wire, or a nickel-copper alloy wire. The heating wire 220 may be provided by being coated or exposed, by twisting multiple stands, or by being knitted.

The wire 230 may include the plus wire 230 connected to a plus power and the minus wire 230 connected to a minus power. The plus wire 230 and one side of the heating wire 220 are electrically connected to each other via the connection wire 240. The minus wire 230 and the other side of the heating wire 220 are electrically connected to each other via the connection wire 240.

The connection wire 240 may be formed of any electrically conductive material including the same material as the wire 230 or the heating wire 220.

The heating element 200 may be capable of surface heating of 30 to 60°C, but the present disclosure is not limited thereto. When the heating element 200 having a high heating temperature is installed in a position easily accessed by people due to the structure of a building, to prevent burns by contact with the heating element 200, a safety net 400 for preventing contact with the heating element 200 may be further provided around the heating element 200 to be spaced apart from the heating element 200 by a certain distance.

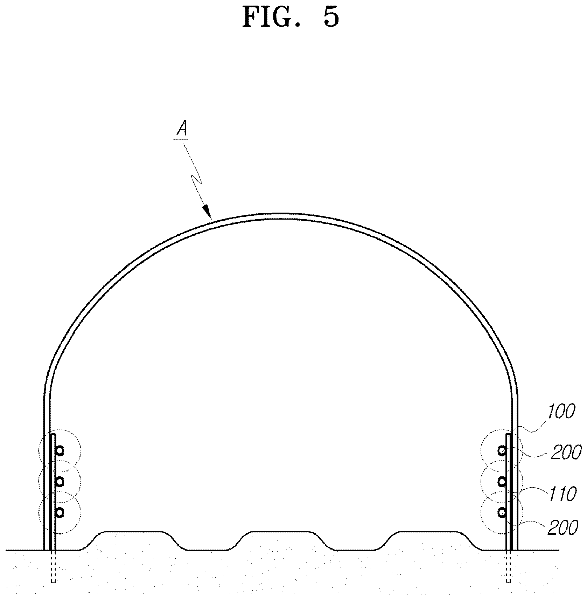

The main control unit 300, as illustrated in FIG. 5, may include a power supply unit 310 for receiving the electrical power from an external power source and supplying electricity to the heating element 200, a temperature control unit 320 for setting a heating temperature by the heating of the heating element 200, a time control unit 330 for setting a heating time by the heating of the heating element 200, a display 340 for displaying the temperature set by the temperature control unit 320 and the time set by the heating time control unit 330, sensor units 351 and 352 respectively detecting the temperature of the power supply unit 310 and the temperature of the inside of a building, and a microcomputer 360 for controlling supply of electricity performed by the power supply unit 310 according to signals provided by the temperature control unit 320, the time control unit 330, and the sensor units 351 and 352.

The power supply unit 310 is connected by the wire 230 to receive the electrical power from the external power source and supply electricity to the heating element 200, and may include a switch, which is controlled by the microcomputer 360 to cut off the supply of electricity from the external power source to the heating element 200.

The temperature control unit 320 is provided in form of a switch or a toggle switch with a keypad capable of inputting numbers, and connected to an input portion of the microcomputer 360 to input a user command for setting the heating temperature to the microcomputer 360.

The time control unit 330 is provided in form of a switch or a toggle switch with a keypad capable of inputting numbers, and connected to the input portion of the microcomputer 360 to input a user command for setting the heating time to the microcomputer 360.

The display 340 is formed of an LCD to output an input value that a user inputs through the temperature control unit 320 and the time control unit 330, in a number or a letter.

The sensor units 351 and 352 may include the first sensor 351 for detecting the temperature of the power supply unit 310 and the second sensor 352 for detecting the temperature of the inside of a building where heating is performed by the heating element 200.

The first sensor 351 is directly installed on the power supply unit 310 to detect a temperature of a surface of the power supply unit 310 and provides a detected temperature value to the microcomputer 360. Accordingly, when overheat of the power supply unit 310 is detected in a process of supplying electricity from the power supply unit 310 to the heating element 200, the microcomputer 360 cuts off the supply of power by controlling the switch of the power supply unit 310, thereby preventing fire risk due to the overheat of the power supply unit 310.

The second sensor 352 may be installed in an outer case 370 forming the main control unit 300 that is formed capable of introducing the indoor air of a building to enable the detection of the temperature of the inside of a building where heating is performed by the heating element 200, or installed spaced apart from the outer case 370 of the main control unit 300 by being connected to the input portion of the microcomputer 360 by the connection wire 240 to provide the detected temperature value to the microcomputer 360, thereby detecting the temperature of the inside of a building and providing the detected temperature value to the microcomputer 360.

The microcomputer 360 is a microprocessor capable of including a control program, and receives and analyzes input data from the temperature control unit 320, the time control unit 330, and the sensor units 351 and 352 and compares, analyzes, and calculate temperature and time, thereby controlling the supply of electricity to the heating element 200 and simultaneously outputting a control data value through the display 340.

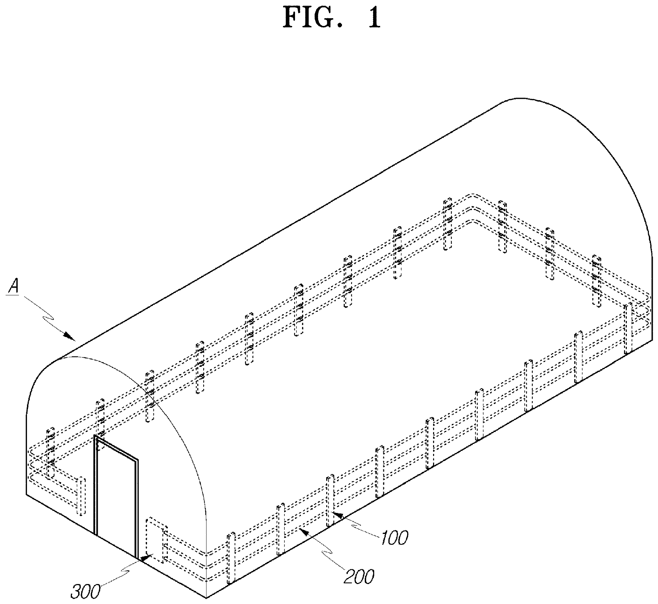

In the natural rotating convection-type heating system according to the present disclosure, as illustrated in FIG. 1, the installation posts 100 are installed in a certain interval along the inner wall in the building A, the heating element 200 is placed in each of the brackets 110 formed on each of the installation posts 100, and the heating element 200 is connected to the main control unit 300 such that heating is performed as the main control unit 300 receiving the electrical power from the external power source applies the electrical power to the heating element 200.

Accordingly, when the inside of a building is to be heated by using the natural rotating convection-type heating system according to the present disclosure installed as above, first, a heating temperature of the inside of a building to be heated is set by using the temperature control unit 320 provided in the main control unit 300. When heating is to be continued only for a certain time, a heating time is set by using the time control unit 330 provided in the main control unit 300.

When the settings of the temperature control unit 320 and the time control unit 330 are completed, the microcomputer 360 of the main control unit 300 compares, analyzes, and calculates data according to the temperature setting value set by a user using the temperature control unit 320 and data according to the time set by the user using the time control unit 330, and provides the electrical power to the heating element 200.

When the electrical power is supplied to the heating element 200, the pipe 210 forming the heating element 200 is heated and heat is radiated through an outer surface thereof. Accordingly, the air around the heating element 200 is heated.

In particular, since the heating elements 200 are placed in by the brackets 110 in a vertical direction, the air heated around each of the heating elements 200 is accelerated to be moved upward in a perpendicular direction to the heating element 200 arranged in the vertical direction, and thus the cool air on the floor (lower side) of a building is introduced in a sufficient amount to have directionality toward the lower side of the heating element 200, and the air moved upward passes through the center portion of the room and then moves downward to the lower side, circulating the inside of a building, thereby implementing a rapid and smooth natural rotating convection effect.

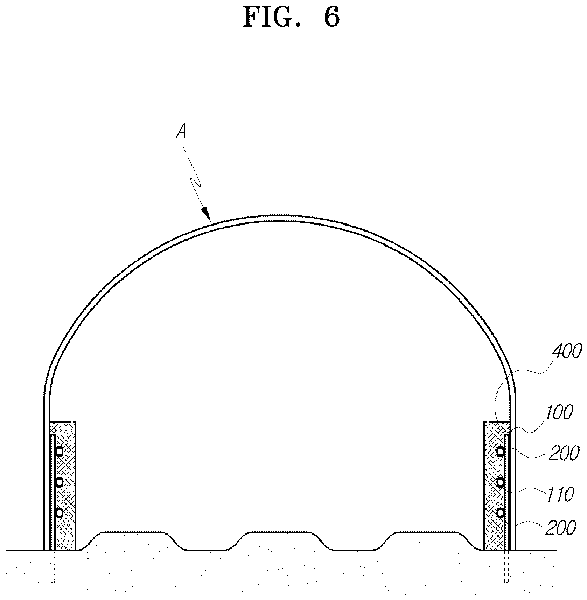

Accordingly, as illustrated in FIG. 6, since heating is performed as the air inside a building is naturally circulated by the natural rotating convection effect occurring by the heating element 200 installed in the building, a decrease in the oxygen density may be prevented, and thus fresh indoor air may be maintained and the inside of a building may be uniformly heated with a less deviation of the indoor temperature.

In the above heating process, when the temperature of the inside of a building detected by the sensor units 351 and 352 provided in the main control unit 300 is lower than the temperature set by the temperature control unit 320, the output of the power supplied by the main control unit 300 to the heating element 200 is increased, and thus the heating element 200 is heated to a higher temperature so that the temperature of the inside of a building may be increased.

In contrast, when the temperature of the inside of a building detected by the sensor units 351 and 352 is higher than the temperature set by the temperature control unit 320, the output of the power supplied by the main control unit 300 to the heating element 200 is decreased or the power supply is cut off, and thus the heat temperature of the heating element 200 may be decreased or the heating may be stopped so that the temperature of the inside of a building may be lowered and the temperature of the inside of a building may be easily controlled.

Also, as the supply of electricity from the main control unit 300 to the heating element 200 is automatically controlled according to the temperature of the inside of a building detected by the sensor units 351 and 352, unnecessary power consumption may be prevented and energy may be used efficiently.

Since the natural rotating convection-type heating system according to the present disclosure is installed along the inner wall of a building, due to excellent space utilization and convenient installation, the natural rotating convection-type heating system may be used for heating not only general building such as houses, apartments, or commercial buildings, but also various building such as cattle sheds, greenhouses, vinyl houses, and factories. Furthermore, the construction cost compared to an area of a building is very low and the heating cost is much saved due to the efficient energy usage. Furthermore, the manipulation of the main control unit 300 is very simple and thus usability is excellent. Furthermore, the natural rotating convection-type heating system includes an overheat prevention function, fire risk due to overheat may be reduced, and thus excellent safety may be obtained.

## Claims

1. A natural rotating convection-type heating system comprising:
an installation post installed on a bottom surface of a building in a certain interval close to an inner wall of the building and having a plurality of brackets vertically arranged thereon in a certain interval;
a heating element continuously arranged along the inner wall of the building by being placed on each of the plurality of brackets; and
a main control unit configured to apply electrical power to the heating element and control a heating operation of the heating element,
wherein heating of inside of the building is performed by implementing a natural rotating convection effect as air heated by the heating element is moved upward above the heating element and ambient cool air is introduced to a lower portion of the heating element.

2. The natural rotating convection-type heating system of claim 1, wherein the heating element comprises:
a pipe having both end portions that are closed to maintain an inner space in a vacuum state;
a heating wire accommodated in the pipe to radiate heat by electrical conduction;
a wire electrically connected to the heating wire; and
a connection wire connected to the wire and supplying electrical power.

3. The natural rotating convection-type heating system of claim 1, wherein the main control unit comprises:
a power supply unit configured to receive electrical power from an external power source and supply electricity to the heating element;
a temperature control unit configured to set a heating temperature by heating of the heating element;
a time control unit configured to set a heating time by the heating of the heating element;
a display configured to display the temperature set by the temperature control unit and the time set by the heating time control unit;
sensor units configured to respectively detect the temperature of the power supply unit and the temperature of the inside of a building; and
a microcomputer configured to control supply of electricity performed by the power supply unit according to signals provided by the temperature control unit, the time control unit, and the sensor units.
